# EUROPEAN PATENT APPLICATION

(11) **EP 4 124 383 A1**
(43) Date of publication of application: **01.02.2023**
(21) Application number: 21187930.9
(22) Date of filing: 27.07.2021
(51) Int. Cl.: B01J 13/18, C11D 3/50, B01J 13/20

(54) **BIODEGRADABLE MICROCAPSULES**

(71) Applicant: International Flavors & Fragrances Inc., New York, NY 10019 (US)
(72) Inventor: Akeroyd, Niels, 1221 JT Hilversum (NL); Anquetin, Florine, 1221 JT Hilversum (NL); Garcia Cavero, Pedro, 12580 Benicarlo (ES); Hunter, Robert Allan, 1221 JT Hilversum (NL); Lei, Yabin, Union Beach, 07735 (US); Luca Vilciu, Florin, 12580 Benicarlo (ES); Popplewell, Lewis Michael, Union Beach, 07735 (US); Stoica, Sonia-Patricia, 1221 JT Hiversum (NL); Wieland, Julie Ann, Union Beach, 07735 (US); Xu, Li, Union Beach, 07735 (US)
(74) Representative: Barker Brettell LLP

(57) **Abstract**

Disclosed are biodegradable core-shell microcapsule compositions composed of microcapsules having a wall formed by self-condensation of an isocyanate in the presence of a denatured pea protein as dispersant. Also disclosed are consumer products containing such a core-shell microcapsule composition and methods for producing core-shell microcapsule compositions.

## Description

### Background

Microcapsules are useful in a variety of applications where there is a need to deliver, apply, or release a fragrance or other active material in a time-delayed and controlled manner.

Conventional microcapsules each have a polymeric shell encapsulating an active material in a microcapsule core. The polymeric shell is typically formed via an interfacial polymerization reaction, namely, a polymerization that occurs at an interface between an aqueous phase and an oil phase. These microcapsules have been developed to provide good performance in various consumer products such as laundry detergents. See, *e.g.,* US 7,491,687, US 6,045,835, US 2014/0287008, and WO 2015/023961. Polyurea microcapsules have been developed for delivering fragrances. Their preparation involves the polymerization reaction between wall-forming materials, *e.g.,* a polyisocyanate and a polyamine. During the polymerization reaction, the polyisocyanate can react with many fragrance ingredients such as primary alcohols contained in a fragrance accord. The other wall-forming material polyamine is also reactive towards aldehyde fragrance ingredients. Primary alcohols and aldehydes are common ingredients in many fragrance accords. Such fragrances are not suitable to be encapsulated by conventional microcapsules. In addition, fragrance ingredients having a high water solubility are also unsuitable for conventional encapsulation as these ingredients tend to stay in the aqueous phase instead of being encapsulated in the microcapsule oil core. Challenges remain in encapsulating fragrances and other active materials without losing reactive or water-soluble ingredients.

Methods to incorporate biodegradable polymers into microcapsule compositions have been described. For example, US 10,034,819 B2 and US 2019/0240124 A1 teach microcapsules with an inner shell and outer shell, wherein the outer shell is produced by complex coacervation of first polyelectrolyte such as gelatin and a second polyelectrolyte such as carboxymethyl cellulose, sodium carboxymethyl guar gum, xanthan gum and plant gums.

Similarly, EP 2588066 B1 describes a coacervated capsule prepared with a coating layer composed of a protein, and optionally a non-protein polymer.

Further, EP 2811846 B1 describes the use of protein aggregates as an interface layer around a hydrophobic substance.

EP 1855544 B8 teaches the use of the encapsulation of an active ingredient in a matrix composed of 0.5-95 wt% of anionic polysaccharides and 0.5-95 wt% of peptides having a molecular mass within the range of 0.3-12 kDa.

EP 3746217 A1 and WO 2020/195132 A1 describe the preparation of core-shell microcapsules by cross-linking a protein into the wall of the microcapsule.

US 10,166,196 B2 discloses an agglomeration of primary microcapsules composed of a primary shell and outer shell, wherein the outer shell is the primary shell and outer shell are products of a complex coacervation reaction of a first protein such as a pea or soy protein and a second polymer such as an agar, gellan gum, gum arabic, casein, cereal prolamine, pectin, alginate, carrageenan, xanthan gum, canola protein, dilutan gum, locus bean gum, or welan gum.

There is a need to develop a microcapsule composition suitable for encapsulating active materials having ingredients that are sustainable and biodegradable.

### Summary of the Invention

This invention is a core-shell microcapsule composition composed of (a) microcapsules having a mean diameter of 1 to 100 microns, the core of the microcapsules comprises an active material (*e.g*., at least one fragrance, pro-fragrance, malodor counteractive agent, or a combination thereof) and the shell of the microcapsules comprises a trimethylol propane-adduct of xylylene diisocyanate; (b) a dispersant comprising denatured pea protein; and (c) a hydrocolloid comprising gum arabic. In some aspects, the core-shell microcapsule composition further includes at least one rheology modifier (*e.g*., xanthan gum), preservative, emulsifier, or a combination thereof. In other aspects, the trimethylol propane-adduct of xylylene diisocyanate is present at 0.1 to 8% by weight of the core-shell microcapsule composition. A consumer product, *e.g*., fabric softener, a fabric refresher, a liquid laundry detergent, a dry laundry detergent, personal wash, hair conditioner, hair shampoo, body lotion, deodorant, antiperspirant or fine fragrance is also provided.

The invention also encompasses a method for producing a core-shell microcapsule composition by (a) preparing an aqueous phase by (i) denaturing a pea protein, (ii) adjusting the pH to below 6 (*e.g*., between 4.5 and 3.5), and (iii) adding gum arabic as a hydrocolloid; (b) preparing an oil phase comprising an active material (*e.g*., at least one fragrance, pro-fragrance, malodor counteractive agent, or a combination thereof) and a trimethylol propane-adduct of xylylene diisocyanate; (c) emulsifying the oil phase into the aqueous phase to form a slurry; and (d) curing the slurry at a temperature below 80°C (*e.g*., in the range of 63°C to 67°C) to produce a core-shell microcapsule composition. In some aspects, the method further includes the addition of at least one rheology modifier (*e.g*., xanthan gum), preservative, emulsifier, or a combination thereof. In other aspects, the rheology modifier as added prior to step (c). In further aspects, the trimethylol propane-adduct of xylylene diisocyanate is present at a level between 0.1% and 8% based on the weight of the core-shell microcapsule composition.

This invention further provides a method for producing a biodegradable core-shell microcapsule composition by polymerizing a wall material consisting of an isocyanate in the presence of a denatured pea protein, wherein the isocyanate is present at a level of less than 1% by weight of the biodegradable core-shell microcapsule composition.

All parts, percentages and proportions referred to herein and in the claims are by weight unless otherwise indicated.

The values and dimensions disclosed herein are not to be understood as being strictly limited to the exact numerical values recited. Instead, unless otherwise specified, each such value is intended to mean both the recited value and a functionally equivalent range surrounding that value. For example, a value disclosed as "50%" is intended to mean "about 50%."

The terms "capsule" and "microcapsule" are used interchangeably.

The terms "g," "mg," and "µg" refer to "gram," "milligram," and "microgram," respectively. The terms "L" and "mL" refer to "liter" and "milliliter," respectively.

The details of one or more aspects of the invention are set forth in the description below. Other features, objects, and advantages will be apparent from the description and the claims.

### Brief Description of the Drawings

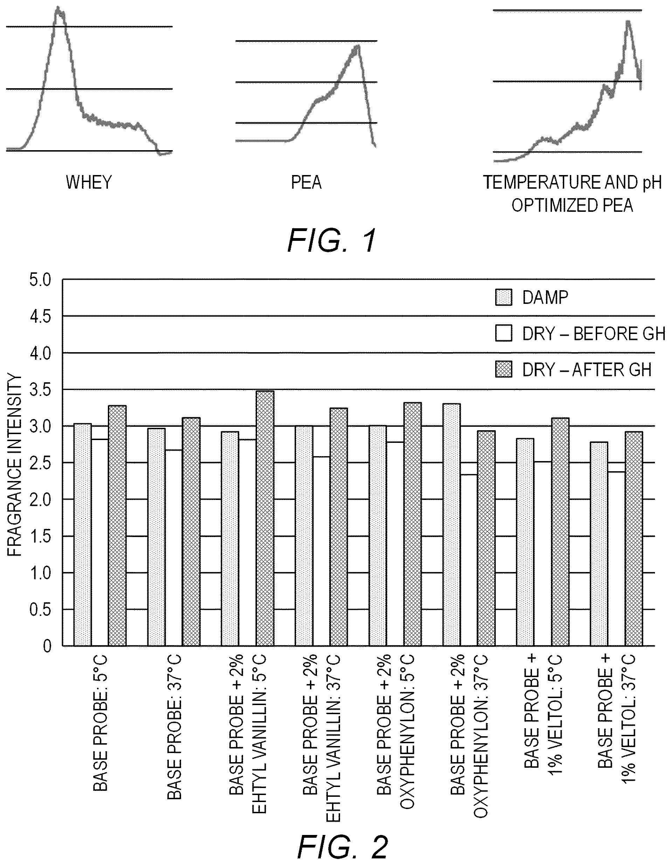

FIG. 1 shows the force curve generated in a capsule breaking experiment for capsules prepared with whey protein according to Example 7 of WO 2020/131875 A2 with the addition of citric acid prior to curing to achieve a cure pH of 5; pea protein according to Example 2 herein; and pea protein with optimized cure temperatures and pH as described in Example 3 herein. This analysis indicated that capsule wall properties could be modified by the protein select and, more importantly, by optimizing the curing profile and pH of the capsule formation reaction.
FIG. 2 shows stable performance of ethyl vanillin in a base probe fragrance when encapsulated in microcapsules as described in Example 9.

### Detailed Description of the Invention

It has now been found that isocyanate, in particular a trimethylol propane-adduct of xylylene diisocyanate, when reacted with water to form a primary amine, will self-condense in the presence of a pea protein (as dispersant) and form a wall material suitable for encapsulation of active materials. Notably, the isocyanate does not cross-link with the protein. Rather, the pea protein appears to function as a scaffold to facilitate the self-condensation reaction of the isocyanate to form a wall polymer encapsulating the active material. Moreover, addition of gum arabic to the reaction mixture facilitates dissolution of pea protein in the aqueous phase thereby preventing aggregation of the same.

Accordingly, this invention provides a core-shell microcapsule composition composed of microcapsules, wherein the core of the microcapsules includes an active material and the shell of the microcapsules is formed by the self-condensation of a trimethylol propane-adduct of xylylene diisocyanate; a denatured pea protein as a dispersant; and gum arabic as a hydrocolloid. Such a microcapsule composition is shown to be an effective delivery system capable of delivering a fragrance in a consumer product such as a fabric conditioner. Additionally, the microcapsule composition delivery system also finds utility in a wide range of consumer applications, *e.g.,* personal care products including shampoos, hair conditioners, hair rinses, hair refreshers; personal wash such as bar soaps, body wash, personal cleaners and sanitizers; fabric care such as fabric refreshers, softeners and dryer sheets, ironing water, industrial cleaners, liquid and powder detergent including unit dose capsules, rinse conditioners, and scent booster products; fine fragrances such as body mist and Eau De Toilette products; deodorants; roll-on products, and aerosol products.

The terms "microcapsule" and "capsule" are used herein interchangeably. The microcapsule wall of the core-shell microcapsules of this invention is composed of a single type of wall polymer, in particular an isocyanate, which self-condenses in the presence of water. In this regard, the wall of the core-shell microcapsule is formed from a single type of wall polymer that consists of or consists essentially of one or more isocyanates. In this regard, the wall is preferably not formed by the addition of a cross-linker, *e.g*., a carbonyl, amine, polyamine, or polyalcohol crosslinker, and is therefore preferably devoid of an exogenous cross-linking agent.

*Isocyanates.* The terms "isocyanate," "multifunctional isocyanate," and "polyisocyanate" all refer to a compound having two or more isocyanate (-NCO) groups. Suitable isocyanates include, for example, 1,5-naphthylene diisocyanate, 4,4'-diphenylmethane diisocyanate (MDI), hydrogenated MDI (H12MDI), xylylene diisocyanate (XDI), tetramethylxylol diisocyanate (TMXDI), 4,4'-diphenyldimethylmethane diisocyanate, di- and tetraalkyldiphenylmethane diisocyanate, 4,4'-dibenzyl diisocyanate, 1,3-phenylene diisocyanate, 1,4-phenylene diisocyanate, the isomers of tolylene diisocyanate (TDI), optionally in a mixture, 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5, 5-trimethylcyclohexane, chlorinated and brominated diisocyanates, phosphorus-containing diisocyanates, 4,4'-diisocyanatophenylperfluoroethane, tetramethoxybutane 1,4-diisocyanate, butane 1,4-diisocyanate, hexane 1,6-diisocyanate (HDI), dicyclohexylmethane diisocyanate, cyclohexane 1,4-diisocyanate, ethylene diisocyanate, phthalic acid bisisocyanatoethyl ester, also polyisocyanates with reactive halogen atoms, such as 1-chloromethylphenyl 2,4-diisocyanate, 1-bromomethylphenyl 2,6-diisocyanate, and 3,3-bischloromethyl ether 4,4'-diphenyldiisocyanate. Sulfur-containing polyisocyanates are obtained, for example, by reacting hexamethylene diisocyanate with thiodiglycol or dihydroxydihexyl sulfide. Further suitable diisocyanates are trimethylhexamethylene diisocyanate, 1,4-diisocyanatobutane, 1,2-diisocyanatododecane, dimer fatty acid diisocyanate, or a combination thereof.

Other suitable commercially-available isocyanates sold under the tradenames LUPRANATE^{®} M20 (PMDI, commercially available from BASF containing isocyanate group "NCO" 31.5 wt %), where the average n is 0.7; BAYHYDUR^{®} N304 and BAYHYDUR^{®} N305, which are aliphatic water-dispersible isocyanates based on hexamethylene diisocyanate; DESMODUR^{®} N3600, DESMODUR^{®} N3700, and DESMODUR^{®} N3900, which are low viscosity, polyfunctional aliphatic isocyanates based on hexamethylene diisocyanate; DESMODUR^{®} 3600 and DESMODUR^{®} N100 which are aliphatic isocyanates based on hexamethylene diisocyanate, commercially available from Bayer Corporation (Pittsburgh, PA); PAPI^{®} 27 (PMDI commercially available from Dow Chemical having an average molecular weight of 340 and containing NCO 31.4 wt %) where the average n is 0.7; MONDUR^{®} MR (PMDI containing NCO at 31 wt % or greater, commercially available from Bayer) where the average n is 0.8; MONDUR^{®} MR Light (PMDI containing NCO 31.8 wt %, commercially available from Bayer) where the average n is 0.8; MONDUR^{®} 489 (PMDI commercially available from Bayer containing NCO 30-31.4 wt %) where the average n is 1.0; poly[(phenylisocyanate)-co-formaldehyde] (Aldrich Chemical, Milwaukee, WI), other isocyanate monomers such as DESMODUR^{®} N3200 (poly(hexamethylene diisocyanate) commercially available from Bayer), and TAKENATE^{®} D110N (xylene diisocyanate adduct polymer commercially available from Mitsui Chemicals corporation, Rye Brook, NY, containing NCO 11.5 wt %), DESMODUR^{®} L75 (an isocyanate base on toluene diisocyanate commercially available from Bayer), and DESMODUR^{®} IL (another isocyanate based on toluene diisocyanate commercially available from Bayer).

In some aspects, the isocyanate used in the preparation of the capsules of this invention is a single isocyanate. In other aspects the isocyanate is a combination of isocyanates. In some aspects, the combination of isocyanates includes an aliphatic isocyanate and an aromatic isocyanate. In particular, the combination of isocyanates is a biuret of hexamethylene diisocyanate and a trimethylol propane-adduct of xylylene diisocyanate. In certain aspects, the isocyanate is an aliphatic isocyanate or a combination of aliphatic isocyanate, free of any aromatic isocyanate. In other words, in these aspects, no aromatic isocyanate is used to prepare the capsule wall. In accordance with certain aspects of this invention a trimethylol propane-adduct of xylylene diisocyanate, the wall is formed form a single isocyanate, which is a trimethylol propane-adduct of xylylene diisocyanate.

The average molecular weight of certain suitable isocyanates varies from 250 Da to 1000 Da and preferably from 275 Da to 500 Da. In general, the range of the isocyanate concentration varies from 0.1% to 10%, preferably from 0.1% to 8%, more preferably from 0.2% to 5%, and even more preferably from 1.5% to 3.5% or 0.1% to 5%, all based on the weight of the capsule delivery system. Ideally, the isocyanate is present at a level of less than 1% (*e.g*., 0.99%, 0.98%, 0.97%, 0.96%, 0.95%, 0.94%, 0.93%, 0.92%, 0.91%, 0.90%, 0.85%, 0.80%, 0.70%, 0.60%, 0.50%, 0.4%, 0.3%, 0.2% or 0.1%) by weight of the biodegradable core-shell microcapsule composition.

*Microcapsule Formation Aids.* Most microcapsule formation aids are used as dispersants (namely, emulsifiers or surfactants). They facilitate the formation of stable emulsions containing nano- or micro-sized oil drops to be encapsulated. Further, microcapsule formation aids improve the performance of the microcapsule by stabilizing capsules and/or their deposition to the target areas or releasing to the environment. Performance is measured by the intensity of the fragrance release during the use experience, such as the pre-rub and post-rub phases in a laundry experience. The pre-rub phase is the phase when the microcapsules have been deposited on the cloth, *e.g*., after a fabric softener containing microcapsules has been used during the wash cycle. The post-rub phase is after the microcapsules have been deposited and the microcapsules are broken by friction or other similar mechanisms.

The amount of these microcapsule formation aids is anywhere from about 0.1% to about 40% by weight of the microcapsule, more preferably from 0.1% to about 10%, more preferably 0.1% to 5% by weight.

Examples of microcapsule formation aids are polyvinyl pyrrolidone, polyvinyl alcohol, poly(styrene sulfonate), carboxymethyl cellulose, sodium salt of naphthalene sulfonate condensate, co-polymer of ethylene and maleic anhydride, an alginate, hyaluronic acid, poly(acrylic acid), carboxymethylcellulose, copolymers of acrylic acid and acrylamide, copolymer of acrylamide and acrylamidopropyltrimonium chloride, terpolymers of (acrylic acid, acrylamide, and acrylamidopropyltrimonium chloride), partially or completely hydrolyzed polyvinyl acetate polymers (*i.e.*, polyvinyl alcohol), or a combination thereof.

Other microcapsule formation aids include water-soluble salts of alkyl sulfates, alkyl ether sulfates, alkyl isothionates, alkyl carboxylates, alkyl sulfosuccinates, alkyl succinamates, alkyl sulfate salts such as sodium dodecyl sulfate, alkyl sarcosinates, alkyl derivatives of protein hydrolysates, acyl aspartates, alkyl or alkyl ether or alkylaryl ether phosphate esters, sodium dodecyl sulphate, phospholipids or lecithin, or soaps, sodium, potassium or ammonium stearate, oleate or palmitate, alkylarylsulfonic acid salts such as sodium dodecylbenzenesulfonate, sodium dialkylsulfosuccinates, dioctyl sulfosuccinate, sodium dilaurylsulfosuccinate, poly(styrene sulfonate) sodium salt, isobutylene-maleic anhydride copolymer, sodium alginate, cellulose sulfate and pectin, isobutylene-maleic anhydride copolymer, gum arabic, carrageenan, sodium alginate, pectic acid, tragacanth gum, almond gum and agar; semi-synthetic polymers such as sulfated cellulose, sulfated methylcellulose, carboxymethyl starch, phosphated starch, lignin sulfonic acid; and synthetic polymers such as maleic anhydride copolymers (including hydrolysates thereof), polyacrylic acid, polymethacrylic acid, acrylic acid butyl acrylate copolymer or crotonic acid homopolymers and copolymers, vinylbenzenesulfonic acid or 2-acrylamido-2-methylpropanesulfonic acid homopolymers and copolymers, and partial amide or partial ester of such polymers and copolymers, carboxymodified polyvinyl alcohol, sulfonic acid-modified polyvinyl alcohol and phosphoric acid-modified polyvinyl alcohol, phosphated or sulfated tristyrylphenol ethoxylates.

Commercially available surfactants include, but are not limited to, sulfonated naphthalene-formaldehyde condensates sold under the tradename MORWET^{®} D425 (sodium salt of alkylnaphthalenesulfonate formaldehyde condensate, Akzo Nobel, Fort Worth, TX); partially hydrolyzed polyvinyl alcohols sold under the tradenames MOWIOL^{®}, *e.g.,* MOWIOL^{®} 3-83 (Air Products), or SELVOL^{®} 203 (Sekisui), or polyvinyl alcohols such as Ultalux FP, Ultalux FA, Ultalux AD, OKS-8089 (Sourus); ethylene oxide-propylene oxide block copolymers or poloxamers sold under the tradenames PLURONIC^{®}, SYNPERONIC^{®} or PLURACARE^{®} materials (BASF); sulfonated polystyrenes sold under the tradename FLEXAN^{®} II (Akzo Nobel); ethylene-maleic anhydride polymers sold under the tradename ZEMAC^{®} (Vertellus Specialties Inc.); copolymer of acrylamide and acrylamidopropyltrimonium chloride sold under the tradename SALCARE^{®} SC 60 (BASF); and polyquaternium series such as Polyquaternium 11 ("PQ11;" a copolymer of vinyl pyrrolidone and quaternized dimethylaminoethyl methacrylate; sold by BASF as Luviquat PQ11 AT 1). Surfactant MOWIOL^{®} 3-83 has a viscosity of 2-4 mPa·S (*e.g*., 3 mPa·S), a degree of hydrolysis of 80-85% (*e.g*., 83%), an ester value of 170-210 mg KOH/g (*e.g.*, 190 mg KOH/g), and a residual unhydrolyzed acetyl content of 13-18% (*e.g.*, 15%). In certain aspects, the surfactant or emulsifier is a sulfonated polystyrene, *e.g.,* the high molecular weight polystyrene sulfonate, sodium salt sold under the tradename FLEXAN^{®} II.

In other aspects, the capsule formation aid is a processing aid such as a hydrocolloid, which improves the colloidal stability of the slurry against coagulation, sedimentation and creaming. The term "hydrocolloid" refers to a broad class of water-soluble or water-dispersible polymers having anionic, cationic, zwitterionic or non-ionic character. Hydrocolloids useful in the present invention include, but are not limited to, polycarbohydrates, such as starch, modified starch, dextrin, maltodextrin, and cellulose derivatives, and their quaternized forms; natural gums such as alginate esters, carrageenan, xanthan, agar-agar, pectins, pectic acid, gum arabic, gum tragacanth and gum karaya, guar gums and quaternized guar gums; gelatin, protein hydrolysates and their quaternized forms; synthetic polymers and copolymers, such as poly(vinyl pyrrolidone-co-vinyl acetate), poly(vinyl alcohol-co-vinyl acetate), poly((met)acrylic acid), poly(maleic acid), poly(alkyl(meth)acrylate-co-(meth)acrylic acid), poly(acrylic acid-co-maleic acid)copolymer, poly(alkyleneoxide), poly(vinylmethylether), poly(vinylether-co-maleic anhydride), and the like, as well as poly-(ethyleneimine), poly((meth)acrylamide), poly(alkyleneoxide-co-dimethylsiloxane), poly(amino dimethylsiloxane), Ultrez 20 (Acrylates/C10-30 Alkyl Acrylate Crosspolymer), cross-linked homopolymer of acrylic acid polymerized in a cyclohexane and ethyl acetate co-solvent system sold under the tradename CARBOPOL^{®} Ultrez 30, acrylates copolymer sold under the tradename ACULYN^{®} Excel (Acrylates Copolymer), crosslinked polyacrylic acid polymer sold under the tradename CARBOPOL^{®} 981 (Carbomer), and the like, and their quaternized forms. In certain aspects, the microcapsule composition is prepared in the presence of gum arabic as a hydrocolloid.

The capsule formation aid can also be used in combination with carboxymethyl cellulose ("CMC"), polyvinylpyrrolidone, polyvinyl alcohol, alkylnaphthalenesulfonate formaldehyde condensates, and/or a surfactant during processing to facilitate capsule formation. Examples of surfactants that can be used in combination with the capsule formation aid include, but are not limited to, cetyl trimethyl ammonium chloride (CTAC), poloxamers sold under the tradenames PLURONIC^{®} (*e.g*., PLURONIC^{®} F127), PLURAFAC^{®} (*e.g.*, PLURAFAC^{®} F127), or Miranet-N, saponins sold under the tradename Q-NATURALE^{®} (National Starch Food Innovation); or a gum arabic such as Seyal or Senegal. In certain aspects, the CMC polymer has a molecular weight range between about 90,000 Daltons to 1,500,000 Daltons, preferably between about 250,000 Daltons to 750,000 Daltons and more preferably between 400,000 Daltons to 750,000 Daltons. The CMC polymer has a degree of substitution between about 0.1 to about 3, preferably between about 0.65 to about 1.4, and more preferably between about 0.8 to about 1.0. The CMC polymer is present in the capsule slurry at a level from about 0.1% to about 2% and preferably from about 0.3% to about 0.7%. in other aspects, polyvinylpyrrolidone used in this invention is a water-soluble polymer and has a molecular weight of 1,000 to 10,000,000. Suitable polyvinylpyrrolidone are polyvinylpyrrolidone K12, K15, K17, K25, K30, K60, K90, or a combination thereof. The amount of polyvinylpyrrolidone is 2-50%, 5-30%, or 10-25% by weight of the capsule delivery system. Commercially available alkylnaphthalenesulfonate formaldehyde condensates include MORWET^{®} D-425, which is a sodium salt of naphthalene sulfonate condensate by Akzo Nobel, Fort Worth, TX.

In some aspects, a food-grade dispersant is used. The term "food-grade dispersant" refers to a dispersant having a quality as fit for human consumption in food. They can be natural or non-natural products. A natural product or surfactant refers to a product that is naturally occurring and comes from a nature source. Natural products/surfactants include their derivatives which can be salted, desalted, deoiled, fractionated, or modified using a natural enzyme or microorganism. On the other hand, a non-natural surfactant is a chemically synthesized surfactant by a chemical process that does not involve an enzymatic modification.

Natural dispersants include quillaja saponin, lecithins, gum arabic, pectin, carrageenan, chitosan, chondroitin sulfate, modified cellulose, cellulose gum, modified starch, whey protein, pea protein, egg white protein, silk protein, gelatin of fish, proteins of porcine or bovine origin, ester gum, fatty acids, or a combination thereof. In certain aspects, the microcapsule composition is prepared in the presence of denatured protein, *e.g.,* a denatured pea protein, as a dispersant.

Plant storage proteins are proteins that accumulate in various plant tissues and function as biological reserves of metal ions and amino acids. Plant storage proteins can be classified into two classes: seed or grain storage proteins and vegetative storage proteins. Seed/grain storage proteins are a set of proteins that accumulate to high levels in seeds/grains during the late stages of seed/grain development, whereas vegetative storage proteins are proteins that accumulate in vegetative tissues such as leaves, stems and, depending on plant species, tubers. During germination, seed/grain storage proteins are degraded and the resulting amino acids are used by the developing seedlings as a nutritional source. In some aspects, the dispersant used in the preparation of a microcapsule is a leguminous storage protein, in particular a protein extracted from soy, lupine, pea, chickpea, alfalfa, horse bean, lentil, haricot bean, or a combination thereof. Preferably, the denatured protein is a denatured pea protein, in particular a denatured pea protein isolate.

In particular, the denatured pea protein is intended to include a pea protein isolate, pea protein concentrate, or a combination thereof. Pea protein isolates and concentrates are generally understood to be composed of several proteins. For example, pea protein isolates and concentrates can include legumin, vicilin and convicilin proteins. The term "pea protein" is also intended to include a partially or completely modified or denatured pea protein. Individual storage polypeptides (*e.g*., legumin, vicilin, or convicilin) can also be used in the preparation of microcapsules of this invention. Individual proteins can be isolated and optionally purified to homogeneity or near homogeneity, *e.g*., 90%, 92%, 95%, 97%, 98%, or 99% pure.

Ideally, the pea protein of this invention is denatured, preferably without causing gelation of the pea protein. Exemplary conditions for protein denaturation include, but are not limited to, exposure to heat or cold, changes in pH, exposure to denaturing agents such as detergents, urea, or other chaotropic agents, or mechanical stress including shear. In some aspects, the pea protein is partially denatured, *e.g*., 50%, 60%, 70%, 80% or 85% (w/w) denatured. In other aspects, the pea protein is substantially or completely denatured, *e.g*., at least 90%, 91%, 92%, 93%, 94%, 95%, 96%, 97%, 98%, 99% or 100% (w/w) denatured. For example, when an 8% pea storage protein solution (w/v) is used, the solution can be treated at a temperature of 80°C to 90°C for 20 to 30 minutes (or preferably 85°C for 25 minutes) to yield a substantially denatured pea storage protein. Accordingly, depending on the degree of denaturation desired, it will be appreciated that higher temperatures and shorter times can also be employed.

In particular, it has been found that chaotropic agents are particularly useful in providing a denatured protein of use in the preparation of the biodegradable microcapsules of this invention. As is conventional in the art, a chaotropic agent is a compound which disrupts hydrogen bonding in aqueous solution, leading to increased entropy. Generally, this reduces hydrophobic effects which are essential for three dimensional structures of proteins. Chaotropes can be defined by having a positive chaotropic value, *i.e*., kJ kg⁻¹ mole on the Hallsworth Scale. Examples of chaotropicity values are, for example, CaCl₂ +92.2 kJ kg⁻¹, MgCl₂ kJ kg⁻¹ +54.0, butanol +37.4 kJ kg⁻¹, guanidine hydrochloride +31.9 kJ kg⁻¹, and urea +16.6 kJ kg⁻¹. In certain aspects, the chaotropic agent is a guanidinium salt, *e.g*., guanidinium sulphate, guanidinium carbonate, guanidinium nitrate or guanidinium chloride. In particular aspects, the pea protein is partially or completely denatured with guanidine carbonate.

In addition to natural dispersants, non-natural dispersants are of use in the preparation of the microcapsules of this invention. Non-natural dispersants include N-lauroyl-L-arginine ethyl ester, sorbitan esters, polyethoxylated sorbitan esters, polyglyceryl esters, fatty acid esters, or a combination thereof.

Other food safe dispersants can also be used in the microcapsule of this invention. Examples include ammonium phosphatides, acetic acid esters of mono- and diglycerides (Acetem), lactic acid esters of mono- and diglycerides of fatty acids (Lactem), citric acid esters of mono and diglycerides of fatty acids (Citrem), mono and diacetyl tartaric acid esters of mono and diglycerides of fatty acids (Datem), succinic acid esters of monoglycerides of fatty acids (SMG), ethoxylated monoglycerides, sucrose esters of fatty acids, sucroglycerides, polyglycerol polyricinoleate, propane-1,2-diol esters of fatty acids, thermally oxidized soybean oil interacted with mono- or diglycerides of fatty acids, sodium stearoyl lactylate (SSL), calcium stearoyl lactylate (CSL), stearyl tartrate, polyglycerol esters of interesterified castor oil acid (E476), sodium stearoyllatylate, sodium lauryl sulfate, polyoxyethylated hydrogenated castor oil (for instance, such sold under the tradename CREMO-PHOR^{®}), block copolymers of ethylene oxide and propylene oxide (for instance as sold under the tradename PLURONIC^{®}, polyoxyethylene fatty alcohol ethers, and polyoxyethylene stearic acid ester.

*Encapsulation Methods.* As demonstrated herein, an isocyanate, when reacted with water to form a primary amine, will self-condense in the presence of a pea protein as dispersant and form a wall material suitable for encapsulation of active materials in a core-shell microcapsule. Not wishing to be bound by theory, it is posited that the pea protein provides a scaffold that facilitates self-condensation of the isocyanate. Advantageously, the inclusion of pea protein provides for the use of reduced levels of isocyanate and improves the sustainability and biodegradability of the core-shell microcapsules. Moreover, desirable microcapsule properties such as good dry performance, low discoloration and reduced aggregation or agglomeration can be achieved by adjusting the pH of the emulsion to below 6 and/or curing the microcapsule slurry at a temperature below 80°C.

Accordingly, this invention provides methods for producing core-shell microcapsule compositions, which are biodegradable. Generally, the invention provides a method for producing a biodegradable core-shell microcapsule composition, which involves the step of polymerizing a wall material consisting of an isocyanate in the presence of a denatured pea protein, wherein the isocyanate is present at a level of less than 1% by weight of the biodegradable core-shell microcapsule composition. For the purposes of this invention, the polymerization step is a self-condensation reaction where the isocyanate acts both as the electrophile and the nucleophile.

More particularly, the invention provides a method for producing a core-shell microcapsule composition by (a) preparing an aqueous phase by (i) combining a pea protein with guanidine carbonate to denature the pea protein, (ii) adjusting the pH to below 6, and (iii) adding gum arabic as a hydrocolloid; (b) preparing an oil phase composed of an active material and a trimethylol propane-adduct of xylylene diisocyanate, wherein the trimethylol propane-adduct of xylylene diisocyanate is preferably present at a level between 0.1% and 8% based on the weight of the core-shell microcapsule composition; (c) emulsifying the oil phase into the aqueous phase to form a slurry; and (d) curing the slurry at a temperature below 80°C for a predetermined period of time to produce a core-shell microcapsule composition.

In accordance with some aspects, the aqueous phase of the method above is adjusted to a pH at or below 6 or more preferably below 5.5. Ideally, the pH of the aqueous phase is adjusted to a pH in the range of 2 to 6, 3 to 5.5, preferably between 3.5 and 4.5, or most preferably between 5.8 and 4.2.

In accordance with other aspects, the microcapsules prepared according to the method above are cured at a temperature below 80°C, or preferably below 70°C. Ideally, the slurry is cured at a temperature in the range of 15°C to 80°C (*e.g.*, 55°C to 65°C, 55°C to 70°C, 55°C to 80°C or) for 1 minute to 10 hours (*e.g*., 0.1 hours to 5 hours, 0.2 hours to 4 hours and 0.5 hours to 3 hours). Preferably, the microcapsules slurry is cured at a temperature between 67-63°C, or more preferably at 65°C.

Depending on the nature of the microcapsule, the slurry can be heated to a target cure temperature at a linear rate of 0.5 to 2°C per minute (*e.g*., 1 to 5°C per minute, 2 to 8°C per minute, and 2 to 10°C per minute) over a period of 1 to 60 minutes (*e.g*., 1 to 30 minutes). The following heating methods can be used: conduction for example via oil, steam radiation via infrared, and microwave, convection via heated air, steam injection and other methods known by those skilled in the art. The target cure temperature used herein refers to the minimum temperature in degrees Celsius at which the capsule slurry is cured to retard leaching.

In aspects of this invention, the microcapsules produced by such a method typically have a mean particle size in the range of from 0.1 to 1000 microns (*i.e*., µm) in diameter (*e.g*., 0.5 to 500 microns, 1 to 200 microns, 1 to 100 microns, 2 to 50 microns, 5 to 25 microns, and 1 to 10 microns). The microcapsules produced by the method of this invention are single microcapsules (*i.e*., not agglomerated), and can have a size distribution that is narrow, broad, or multi-modal.

*Active Materials.* The microcapsule compositions of the invention have one or more active materials encapsulated therein. Nonlimiting examples include those described in WO 2016/049456. These active materials include a fragrance, pro-fragrance, flavor, malodor counteractive agent, vitamin or derivative thereof, anti-inflammatory agent, fungicide, anesthetic, analgesic, antimicrobial active, anti-viral agent, anti-infectious agent, anti-acne agent, skin lightening agent, insect repellent, animal repellent, vermin repellent, emollient, skin moisturizing agent, wrinkle control agent, UV protection agent, fabric softener active, hard surface cleaning active, skin or hair conditioning agent, flame retardant, antistatic agent, taste modulator, cell, probiotic, antioxidant, self-tanning agent, dihydroxyacetone, cooler, sensate, malodor reactive material, cosmetic active, or a combination thereof. Cosmetic actives include vitamins, sun filters and sunscreens, anti-aging agents, anti-wrinkle agents, antioxidants, lifting agents, firming agents, anti-spot agents, anti-redness agents, thinning agents, draining agents, moisturizers, soothing agents, scrubbing or exfoliating agents, mattifying agents, sebum regulating agents, skin-lightening actives, self-tanning actives, tanning accelerators, or a combination thereof. In addition to the active materials listed above, the products of this invention can also contain dyes, colorants or pigments, naturally obtained extracts (for example paprika extract and black carrot extract), and aluminum lakes. Notably, the microcapsules of this invention are of use in encapsulating natural extracts, essential oils, and low log P materials such as ethyl vanillin.

*Adjunct Core Materials.* In addition to the active materials, the present invention also provides for the incorporation of adjunct materials including solvents, emollients, and core modifier materials in the core encapsulated by the capsule wall. Other adjunct materials are nanoscale solid particulate materials, polymeric core modifiers, solubility modifiers, density modifiers, stabilizers, humectants, viscosity modifiers, pH modifiers, or a combination thereof. These modifiers can be present in the wall or core of the capsules, or outside the capsules in delivery system. Preferably, they are in the core as a core modifier.

The one or more adjunct material can be added in the amount of from 0.01% to 25% (*e.g.*, from 0.5% to 10%) by weight of the capsule.

Suitable examples of adjunct materials include those described in WO 2016/049456 and US 2016/0158121.

*Deposition Aids.* A capsule deposition aid from 0.01% to 25%, more preferably from 5% to 20% can be included by weight of the capsule. The capsule deposition aid can be added during the preparation of the capsules or it can be added after the capsules have been made.

These deposition aids are used to aid in deposition of capsules to surfaces such as fabric, hair or skin. These include anionically, cationically, nonionically, or amphoteric water-soluble polymers. Suitable deposition aids include polyquaternium-4, polyquaternium-5, polyquaternium-6, polyquaternium-7, polyquaternium-10, polyquaternium-16, polyquaternium-22, polyquaternium-24, polyquaternium-28, polyquaternium-39, polyquaternium-44, polyquaternium-46, polyquaternium-47, polyquaternium-53, polyquaternium-55, polyquaternium-67, polyquaternium-68, polyquaternium-69, polyquaternium-73, polyquaternium-74, polyquaternium-77, polyquaternium-78, polyquaternium-79, polyquaternium-80, polyquaternium-81, polyquaternium-82, polyquaternium-86, polyquaternium-88, polyquaternium-101, polyvinylamine, polyethyleneimine, polyvinylamine and vinylformamide copolymer, an acrylamidopropyltrimonium chloride/acrylamide copolymer, a methacrylamidopropyltrimonium chloride/acrylamide copolymer, polymer comprising units derived from polyethylene glycol and terephthalate, polyester, polymer derivable from dicarboxylic acids and polyols, or a combination thereof. Other suitable deposition aids include those described in WO 2016/049456, pages 13-27. Additional deposition aids are described in US 2013/0330292, US 2013/0337023, and US 2014/0017278.

*Rheology Modifiers.* One or more rheology modifiers or viscosity control agents can be added to the microcapsule composition to achieve a desired viscosity of the composition so that the microcapsule is dispersed in the composition for a pro-longed period of time. During capsule preparation, the rheology modifier is preferably added prior to the emulsification of the aqueous phase and oil phase and is typically disperses homogeneously in the microcapsule slurry and outside of the microcapsule wall of the microcapsules in the composition of this invention. Suitable rheology modifiers include an acrylate copolymer, a cationic acrylamide copolymer, a polysaccharide, or a combination thereof.

Commercially available acrylate copolymers include those under the tradename ACULYN^{®} (from Dow Chemical Company) such as ACULYN^{®} 22 (a copolymer of acrylates and stearth-20 methacrylate), ACULYN^{®} 28 (a copolymer of acrylate and beheneth-25 methacrylate), ACULYN^{®} 33 (a copolymer of acrylic acid and acrylate), ACULYN^{®} 38 (a cross polymer of acrylate and vinyl neodecanoate), and ACULYN^{®} 88 (a cross polymer of acrylate and steareth-20 methacrylate). Particularly useful acrylate copolymers are anionic acrylate copolymer such as ACULYN^{®} 33, an alkali-soluble anionic acrylic polymer emulsion (ASE), which is synthesized from acrylic acid and acrylate comonomers through emulsion polymerization. Acrylate copolymers sold under the tradename CARBOPOL^{®} are also suitable for use in this invention. Examples are CARBOPOL^{®} ETD 2020 polymer (a cross polymer of acrylate and C₁₀-C₃₀ alkyl acrylate), CARBOPOL^{®} ETD 2691, and CARBOPOL^{®} ETD 2623 (a crosslinked acrylate copolymer).

Polysaccharides are another class of agents suitable as rheology modifiers. In certain aspects, polysaccharides of use as rheology modifiers include starches, pectin, and vegetable gums such as alginin, guar gum, locust bean gum, and xanthan gum, *e.g.,* xanthan gum sold under the tradename KELTROL^{®} T (80-mesh food-grade), commercially available from CP Kelco, Atlanta, GA). Preferably, the at least one rheology modifier is a xanthan gum.

*Preservatives.* One or more preservatives can be added to the microcapsule composition to prevent damage or inadvertent growth of microorganisms for a specific period of time thereby increasing shelf life. The preservative can be any organic preservative that does not cause damage to the microcapsule composition. Suitable water-soluble preservatives include organic sulfur compounds, halogenated compounds, cyclic organic nitrogen compounds, low molecular weight aldehydes, parabens, propanediol materials, isothiazolinone, quaternary compounds, benzoates, Examples include low molecular weight alcohols, dehydroacetic acids, phenyl and phenoxy compounds, or a combination thereof.

A non-limiting example of commercially available water-soluble preservative is a mixture of about 77% 5-chloro-2-methyl-4-isothiazolin-3-one and 23% 2-methyl-4-isothiazolin-3-one. Additional antibacterial preservatives include a 1.5% aqueous solution under the tradename KATHON^{®} CG of Rohm &Haas; 5-bromo available under the tradename BRONIDOX L^{®} of Henkel; 2-bromo-2-nitro-1,3-propanediol available under the tradename BRONOPOL^{®} of Inorex; 1,1'-Hexamethylenebis (5-(p-chlorophenyl) biguanide) and salts thereof, such as acetates and digluconates; 1,3-bis (hydroxy) available under the tradename GLYDANT PLUS^{®} from Ronza; glutaraldehyde; ICI Polyaminopropylbiguanide; dehydroacetic acid; and 1,2-Benzisothiazolin-3-one sold under the tradename PROXEL^{®} GXL.

*Microcapsule Delivery System Formulations.* The microcapsule composition can be formulated into a capsule delivery system (*e.g*., a microcapsule composition) for use in consumer products.

The capsule delivery system can be a microcapsule slurry suspended in an external solvent (*e.g.*, water, ethanol, or a combination thereof), wherein the capsule is present at a level 0.1% to 80% (*e.g*., 70-75%, 40-55%, 50-90%, 1% to 65%, and 5% to 45%) by weight of the capsule delivery system.

Alternatively, or in addition to, the capsule and its slurry prepared in accordance with the present invention is subsequently purified. See US 2014/0017287. Purification can be achieved by washing the capsule slurry with water until a neutral pH is obtained.

*Additional Components.* The capsule delivery system can optionally contain one or more other delivery system such as polymer-assisted delivery compositions (see US 8,187,580), fiber-assisted delivery compositions (US 2010/0305021), cyclodextrin host guest complexes (US 6,287,603 and US 2002/0019369), pro-fragrances (WO 2000/072816 and EP 0922084), or a combination thereof. The capsule delivery system can also contain one or more (*e.g.*, two, three, four, five or six more) different capsules including different capsules of this invention and other capsules such as such as aminoplasts, hydrogel, sol-gel, polyurea/polyurethane capsules, and melamine formaldehyde capsules. More exemplary delivery systems that can be incorporated are coacervate capsules (see WO 2004/022221) and cyclodextrin delivery systems (see WO 2013/109798 and US 2011/03085560).

Any compound, polymer, or agent discussed above can be the compound, polymer, or agent itself as shown above, or its salt, precursor, hydrate, or solvate.

Certain compounds, polymers, and agents have one or more stereocenters, each of which can be in the R or S configuration, or a combination thereof. Further, some compounds, polymers, and agents possess one or more double bonds wherein each double bond exists in the E (trans) or Z (cis) configuration, or a combination thereof. The compounds, polymers, and agents include all possible configurational stereoisomeric, regioisomeric, diastereomeric, enantiomeric, and epimeric forms as well as a combination thereof. As such, lysine used herein includes L-lysine, D-lysine, L-lysine monohydrochloride, D-lysine monohydrochloride, lysine carbonate, and so on. Similarly, arginine includes L-arginine, D-arginine, L-arginine monohydrochloride, D-arginine monohydrochloride, arginine carbonate, arginine monohydrate, etc. Guanidine includes guanidine hydrochloride, guanidine carbonate, guanidine thiocyanate, and other guanidine salts including their hydrates. Ornithine include L-ornithine and its salts/hydrates (*e.g.*, monohydrochloride) and D-ornithine and its salts/hydrates (*e.g.,* monohydrochloride).

*Applications.* The delivery systems of the present invention are well-suited for use, without limitation, in the following products:
a) Household products.
   i. Liquid or Powder Laundry Detergents which can use the present invention include those systems described in US 5,929,022, US 5,916,862, US 5,731,278, US 5,565,145, US 5,470,507, US 5,466,802, US 5,460,752, US 5,458,810, US 5,458,809, US 5,288,431, US 5,194,639, US 4,968,451, US 4,597,898, US 4,561,998, US 4,550,862, US 4,537,707, US 4,537,706, US 4,515,705, US 4,446,042, and US 4,318,818
   ii. Unit Dose Pouches, Tablets and Capsules such as those described in EP 1431382 A1, US 2013/0219996 A1, US 2013/0284637 A1, and US 6,492,315. These unit dose formulations can contain high concentrations of a functional material (*e.g.*, 5-100% fabric softening agent or detergent active), fragrance (*e.g*., 0.5-100%, 0.5-40%, and 0.5-15%), and flavor (*e.g.*, 0.1-100%, 0.1-40%, and 1-20%). They can contain no water to limit the water content as low as less than 30% (*e.g*., less than 20%, less than 10%, and less than 5%).
   iii. Scent Boosters such as those described in US 7,867,968, US 7,871,976, US 8,333,289, US 2007/0269651 A1, and US 2014/0107010 A1.
   iv. Fabric Care Products such as Rinse Conditioners (containing 1 to 30 weight % of a fabric conditioning active), Fabric Liquid Conditioners (containing 1 to 30 weight % of a fabric conditioning active), Tumble Drier Sheets, Fabric Refreshers, Fabric Refresher Sprays, Ironing Liquids, and Fabric Softener Systems such as those described in US 6,335,315, US 5,674,832, US 5,759,990, US 5,877,145, US 5,574,179, US 5,562,849, US 5,545,350, US 5,545,340, US 5,411,671, US 5,403,499, US 5,288,417, US 4,767,547 and US 4,424,134
      Liquid fabric softeners/fresheners contains at least one fabric softening agent present, preferably at a concentration of 1 to 30% (*e.g*., 4% to 20%, 4% to 10%, and 8% to 15%). The ratio between the active material and the fabric softening agent can be 1:500 to 1:2 (*e.g.*, 1:250 to 1:4 and 1:100 to 1:8). As an illustration, when the fabric softening agent is 5% by weight of the fabric softener, the active material is 0.01% to 2.5%, preferably 0.02% to 1.25% and more preferably 0.1% to 0.63%. As another example, when the fabric softening agent is 20% by weight of the fabric softener, the active material is 0.04% to 10%, preferably 0.08% to 5% and more preferably 0.4% to 2.5%. The active material is a fragrance, malodor counteractant or a combination thereof. The liquid fabric softener can have 0.15% to 15% of capsules (*e.g.*, 0.5% to 10%, 0.7% to 5%, and 1% to 3%). When including capsules at these levels, the neat oil equivalent (NOE) in the softener is 0.05% to 5% (*e.g.*, 0.15% to 3.2%, 0.25% to 2%, and 0.3% to 1%).
      Suitable fabric softening agents include cationic surfactants. Non-limiting examples are quaternary ammonium compounds such as alkylated quaternary ammonium compounds, ring or cyclic quaternary ammonium compounds, aromatic quaternary ammonium compounds, diquaternary ammonium compounds, alkoxylated quaternary ammonium compounds, amidoamine quaternary ammonium compounds, ester quaternary ammonium compounds, or a combination thereof. Fabric softening compositions, and components thereof, are generally described in US 2004/0204337 and US 2003/0060390. Suitable softening agents include esterquats sold under the tradename REWOQUAT^{®} WE 18 commercially available from Evonik Industries and STEPANTEX^{®} SP-90 commercially available from Stepan Corporation.
   v. Liquid dish detergents such as those described in US 6,069,122 and US 5,990,065
   vi. Automatic Dish Detergents such as those described in US 6,020,294, US 6,017,871, US 5,968,881, US 5,962,386, US 5,939,373, US 5,914,307, US 5,902,781, US 5,705,464, US 5,703,034, US 5,703,030, US 5,679,630, US 5,597,936, US 5,581,005, US 5,559,261, US 4,515,705, US 5,169,552, and US 4,714,562
   vii. All-purpose cleaners including bucket dilutable cleaners and toilet cleaners
   viii. Bathroom Cleaners
   ix. Bath Tissue
   x. Rug Deodorizers
   xi. Candles
   xii. Room Deodorizers
   xiii. Floor Cleaners
   xiv. Disinfectants
   xv. Window Cleaners
   xvi. Garbage bags/trash can liners
   xvii. Air Fresheners including room deodorizer and car deodorizer, scented candles, sprays, scented oil air freshener, Automatic spray air freshener, and neutralizing gel beads
   xviii. Moisture absorber
   xix. Household Devices such as paper towels and disposable Wipes
   xx. Moth balls/traps/cakes
b) Baby Care Products.
   i. Diaper Rash Cream/Balm
   ii. Baby Powder
c) Baby Care Devices.
   i. Diapers
   ii. Bibs
   iii. Wipes
d) Oral Care Products. Tooth care products (as an example of preparations according to the invention used for oral care) generally include an abrasive system (abrasive or polishing agent), for example silicic acids, calcium carbonates, calcium phosphates, aluminum oxides and/or hydroxylapatites, surface-active substances, for example sodium lauryl sulfate, sodium lauryl sarcosinate and/or cocamidopropylbetaine, humectants, for example glycerol and/or sorbitol, thickening agents, for example carboxymethyl cellulose, polyethylene glycols, carrageenan and/or Laponite^{®}, sweeteners, for example saccharin, taste correctors for unpleasant taste sensations, taste correctors for further, normally not unpleasant taste sensations, taste-modulating substances (for example inositol phosphate, nucleotides such as guanosine monophosphate, adenosine monophosphate or other substances such as sodium glutamate or 2-phenoxypropionic acid), cooling active ingredients, for example menthol derivatives, (for example L-menthyllactate, L-menthylalkylcarbonates, menthone ketals, menthane carboxylic acid amides), 2,2,2-trialkylacetic acid amides (for example 2,2-diisopropylpropionic acid methyl amide), icilin and icilin derivatives, stabilizers and active ingredients, for example sodium fluoride, sodium monofluorophosphate, tin difluoride, quaternary ammonium fluorides, zinc citrate, zinc sulfate, tin pyrophosphate, tin dichloride, combinations of various pyrophosphates, triclosan, cetylpyridinium chloride, aluminum lactate, potassium citrate, potassium nitrate, potassium chloride, strontium chloride, hydrogen peroxide, flavorings and/or sodium bicarbonate or taste correctors.
   i. Toothpaste. An exemplary formulation as follows:
      1. calcium phosphate 40-55%
      2. carboxymethyl cellulose 0.8-1.2%
      3. sodium lauryl sulfate 1.5-2.5%
      4. glycerol 20-30%
      5. saccharin 0.1-0.3%
      6. flavor oil 1-2.5%
      7. water q.s. to 100%
      A typical procedure for preparing the formulation includes the steps of (i) mixing by a blender according to the foregoing formulation to provide a toothpaste, and (ii) adding a composition of this invention and blending the resultant mixture till homogeneous.
   ii. Tooth Powder
   iii. Oral Rinse
   iv. Tooth Whiteners
   v. Denture Adhesive
e) Health Care Devices.
   i. Dental Floss
   ii. Toothbrushes
   iii. Respirators
   iv. Scented/flavored condoms
f) Feminine Hygiene Products such as Tampons, Feminine Napkins and Wipes, and Pantiliners.
g) Personal Care Products: Cosmetic or pharmaceutical preparations, *e.g.,* a "water-in-oil" (W/O) type emulsion, an "oil-in-water" (O/W) type emulsion or as multiple emulsions, for example of the water-in-oil-in-water (W/O/W) type, as a PIT emulsion, a Pickering emulsion, a micro-emulsion or nano-emulsion; and emulsions which are particularly preferred are of the "oil-in-water" (O/W) type or water-in-oil-in-water (W/O/W) type. More specifically,
   i. Personal Cleansers (bar soaps, body washes, and shower gels)
   ii. In-shower conditioner
   iii. Sunscreen ant tattoo color protection (sprays, lotions, and sticks)
   iv. Insect repellents
   v. Hand Sanitizer
   vi. Anti-inflammatory balms, ointments, and sprays
   vii. Antibacterial ointments and creams
   viii. Sensates
   ix. Deodorants and Antiperspirants including aerosol and pump spray antiperspirant, stick antiperspirant, roll-on antiperspirant, emulsion spray antiperspirant, clear emulsion stick antiperspirant, soft solid antiperspirant, emulsion roll-on antiperspirant, clear emulsion stick antiperspirant, opaque emulsion stick antiperspirant, clear gel antiperspirant, clear stick deodorant, gel deodorant, spray deodorant, roll-on, and cream deodorant.
   x. Wax-based Deodorant. An exemplary formulation as follows:
      1. Paraffin Wax 10-20%
      2. Hydrocarbon Wax 5-10%
      3. White Petrolatum 10-15%
      4. Acetylated Lanolin Alcohol 2-4%
      5. Diisopropyl Adipate 4-8%
      6. Mineral Oil 40-60%
      7. Preservative (as needed)
      The formulation is prepared by (i) mixing the above ingredients, (ii) heating the resultant composition to 75°C until melted, (iii) with stirring, adding 4% cryogenically ground polymer containing a fragrance while maintaining the temperature 75°C, and (iv) stirring the resulting mixture in order to ensure a uniform suspension while a composition of this invention is added to the formulation.
   xi. Glycol/Soap Type Deodorant. An exemplary formulation as follows:
      1. Propylene Glycol 60-70%
      2. Sodium Stearate 5-10%
      3. Distilled Water 20-30%
      4. 2,4,4-Trichloro-2'-Hydroxy Diphenyl Ether, manufactured by the Ciba-Geigy Chemical Company 0.01-0.5%
      The ingredients are combined and heated to 75°C with stirring until the sodium stearate has dissolved. The resulting mixture is cooled to 40°C followed by addition of a composition of this invention.
   xii. Lotion including body lotion, facial lotion, and hand lotion
   xiii. Body powder and foot powder
   xiv. Toiletries
   xv. Body Spray, aerosol or non-aerosol body spray (WO 2014/014705 and WO 2016/205023)
   xvi. Shave cream and male grooming products
   xvii. Bath Soak
   xviii. Exfoliating Scrub
h) Personal Care Devices.
   i. Facial Tissues
   ii. Cleansing wipes
i) Hair Care Products.
   i. Shampoos (liquid and dry powder)
   ii. Hair Conditioners (Rinse-out conditioners, leave-in conditioners, and cleansing conditioners)
   iii. Hair Rinses
   iv. Hair Refreshers
   v. Hair perfumes
   vi. Hair straightening products
   vii. Hair styling products, Hair Fixative and styling aids
   viii. Hair combing creams
   ix. Hair wax
   x. Hair foam, hair gel, nonaerosol pump spray
   xi. Hair Bleaches, Dyes and Colorants
   xii. Perming agents
   xiii. Hair wipes
j) Beauty Care.
   i. Fine Fragrance-Alcoholic. Compositions and methods for incorporating fragrance capsules into alcoholic fine fragrances are described in US 4,428,869. Alcoholic fine fragrances can contain the following:
      1. Ethanol (1-99%)
      2. Water (0-99%)
      3. A suspending aide including but not limited to: hydroxypropyl cellulose, ethyl cellulose, silica, microcrystalline cellulose, carrageenan, propylene glycol alginate, methyl cellulose, sodium carboxymethyl cellulose or xanthan gum (0.1-1%)
      4. Optionally an emulsifier or an emollient can be included, *e.g*., those listed above
   ii. Solid Perfume
   iii. Lipstick/lip balm
   iv. Make-up cleanser
   v. Skin care cosmetic such as foundation, pack, sunscreen, skin lotion, milky lotion, skin cream, emollients, skin whitening
   vi. Make-up cosmetic including manicure, mascara, eyeliner, eye shadow, liquid foundation, powder foundation, lipstick and cheek rouge
k) Consumer goods packaging such as fragranced cartons, fragranced plastic bottles/boxes.
l) Pet care products.
   i. Cat litter
   ii. Flea and tick treatment products
   iii. Pet grooming products
   iv. Pet shampoos
   v. Pet toys, treats, and chewables
   vi. Pet training pads
   vii. Pet carriers and crates
m) Confectionaries. confectionery include chocolate, chocolate bar products, other products in bar form, fruit gums, hard and soft caramels and chewing gum.
   i. Gum
      1. Gum base (natural latex chicle gum, most current chewing gum bases also presently include elastomers, such as polyvinyl acetate (PVA), polyethylene, (low or medium molecular weight) polyisobutene (PIB), polybutadiene, isobutene-isoprene copolymers (butyl rubber), polyvinyl ethyl ether (PVE), polyvinyl butyl ether, copolymers of vinyl esters and vinyl ethers, styrene-butadiene copolymers (styrene-butadiene rubber, SBR), or vinyl elastomers, for example based on vinyl acetate/vinyl laurate, vinyl acetate/vinyl stearate or ethylene/vinyl acetate, as well as a combination thereof of the mentioned elastomers (see EP 0242325, US 4,518,615, US 5,093,136, US 5,266,336, US 5,601,858 or US 6,986,709) 20-25%
      2. Powdered sugar 45-50%
      3. glucose 15-17%
      4. starch syrup 10-13%
      5. plasticizer 0.1%
      6. flavor 0.8-1.2%
      The components described above were kneaded by a kneader according to the foregoing formulation to provide a chewing gum. Encapsulated Flavor or sensate is then added and blended till homogeneous.
   ii. Breath Fresheners
   iii. Orally Dissolvable Strips
   iv. Chewable Candy
   v. Hard Candy
n) Baked products can include bread, dry biscuits, cakes, and other cookies.
o) Snack foods can include baked or fried potato chips or potato dough products, bread dough products and corn or peanut-based extrudates.
   i. Potato, tortilla, vegetable, or multigrain chips
   ii. Popcorn
   iii. Pretzels
   iv. Extruded stacks
p) Cereal Products can include breakfast cereals, muesli bars and precooked finished rice products.
q) Alcoholic and non-alcoholic beverages can include coffee, tea, wine, beverages containing wine, beer, beverages containing beer, liqueurs, schnapps, brandies, sodas containing fruit, isotonic beverages, soft drinks, nectars, fruit and vegetable juices and fruit or vegetable preparations; instant beverages can include instant cocoa beverages, instant tea beverages and instant coffee beverages.
   i. Ready to drink liquid drinks
   ii. Liquid Drink Concentrates
   iii. Powder Drinks
   iv. Coffee: Instant Cappuccino
      1. Sugar 30-40%
      2. Milk Powder 24-35%
      3. Soluble Coffee 20-25%
      4. Lactose 1-15%
      5. Food Grade Emulsifier 1-3%
      6. Encapsulated Volatile Flavor 0.01-0.5%
   v. Tea
   vi. Alcoholic
r) Spice blends and consumer prepared foods.
   i. Powder gravy, sauce mixes
   ii. Condiments
   iii. Fermented Products
s) Ready to heat foods: ready meals and soups can include powdered soups, instant soups, precooked soups.
   i. Soups
   ii. Sauces
   iii. Stews
   iv. Frozen entrees
t) Dairy Products. Milk products can include milk beverages, ice milk, yogurt, kefir, cream cheese, soft cheese, hard cheese, powdered milk, whey, butter, buttermilk and partially or fully hydrolyzed milk protein-containing products, or flavored milk beverages.
   i. Yogurt
   ii. Ice cream
   iii. Bean Curd
   iv. Cheese
u) Soy protein or other soybean fractions can include soy milk and products produced therefrom, soy lecithin-containing preparations, fermented products such as tofu or tempeh or products produced therefrom and soy sauces.
v) Meat products can include ham, fresh or raw sausage preparations, and seasoned or marinated fresh or salt meat products.
w) Eggs or egg products can include dried egg, egg white, or egg yolk.
x) Oil-based products, or emulsions thereof, can include mayonnaise, remoulade, dressings, and seasoning preparations.
y) Fruit preparations can include jams, sorbets, fruit sauces and fruit fillings; vegetable preparations can include ketchup, sauces, dried vegetables, deep-frozen vegetables, precooked vegetables, vegetables in vinegar and preserved vegetables.
z) Flavored pet foods.

The invention is described in greater detail by the below non-limiting examples. Without further elaboration, it is believed that one skilled in the art can, based on the description herein, utilize the present invention to its fullest extent. All publications cited herein are incorporated by reference in their entirety.

### Example 1: Synthesis of Reference Microcapsules

As described in Example 1 of US 2012/0093899, melamine formaldehyde capsules were prepared. Briefly, 80 parts by weight of Helion fragrance (International Flavors & Fragrance Inc., Union Beach, NJ) was admixed with 20 parts by weight of caprylic/capric triglyceride solvent sold under that tradename NEOBEE^{®} M-5 by Stepan Corp. (Chicago, IL) thereby forming a fragrance/solvent composition. The uncoated capsules were prepared by creating a polymeric wall to encapsulate fragrance/solvent composition droplets. A copolymer of acrylamide and acrylic acid (sold under the tradename ALCAPSOL^{®} 200) was first dispersed in water together with a methylated melamine formaldehyde resin (sold under the tradename CYMEL^{®} 385). These two components were allowed to react under acidic conditions for at least one hour.

The fragrance/solvent composition was then added to the wall polymer solution and droplets of the desired size were achieved by high shear homogenization. For the microcapsule slurry, curing of the polymeric layer around the fragrance/solvent composition droplets was carried out at 125°C. After cooling to room temperature, ethylene urea was added into the microcapsule slurry. Additionally, a rheology modifier and a preservative were added. The pH was adjusted using NaOH. The components of the slurry are listed in Table 1. The slurry contained an overall fragrance load of 28.0%.

**TABLE 1**

| Ingredient | Amount (grams) | Weight % |
|---|---|---|
| Fragrance | 182 | 28 |
| Caprylic/capric triglyceride | 45.5 | 7 |
| Copolymer of acrylamide and acrylic acid | 73.9 | 11.4 |
| Methylated melamine formaldehyde resin | 9.9 | 1.5 |
| Ethylene Urea | 13.3 | 2.0 |
| Acetic Acid | 2.4 | 0.4 |
| Sodium hydroxide | 1.1 | 0.2 |
| Acrylates copolymer sold under the tradename ACULYN^{®} 33A | 6.5 | 1 |
| 1,2-Benzisothiazolin-3-one sold under the tradename PROXEL^{®} GXL | 0.7 | 0.1 |
| Water | 314.8 | 48.4 |
| Total | 650 | 100% |

### Example 2: Preparation of Isocyanate Capsules in the Presence of Pea Protein, Modified Starch/Polystyrene Sulfonate, Sodium Salt

An oil phase was prepared by mixing 80 parts by weight of Helion fragrance with 20 parts by weight of caprylic/capric triglyceride solvent sold under that tradename NEOBEE^{®} M-5 by Stepan Corp. (Chicago, IL) thereby forming a fragrance/solvent composition.

A water phase was prepared by dispersing pea protein powder (15.4 weight %) in water. Guanidine carbonate, as a denaturing agent, was added and pH was adjusted to 5 using citric acid. These components were allowed to react for 15 minutes.

Modified starch sold under the tradename PURITY GUM^{®} Ultra (Ingredion, Westchester, IL) and high molecular weight polystyrene sulfonate, sodium salt sold under the tradename FLEXAN^{®} II were then added to the water phase as emulsifiers and the mixture was allowed to mix for 15 minutes. Tanal-02 (a high molecular weight general purpose hydrolysable tannin; Ajinomoto Natural Specialties, Tokyo, Japan) was subsequently added to the water phase.

A polyisocyanate (trimethylol propane-adduct of xylylene diisocyanate commercially available under the tradename TAKENATE^{®} D110N, Mitsue Chemicals Inc., Japan) was added to the oil phase at 5 weight %. The oil phase was then emulsified into the aqueous phase to form an oil-in-water emulsion under a shearing rate of 7400 revolutions per minute ("RPM") for 3 minutes. For the microcapsule slurry, curing of the polymeric layer around the fragrance/solvent composition droplets was carried out at 55°C for 3.5 hours and 80°C for 30 minutes. Subsequently, a rheology modifier and a preservative were added. The components of the slurry are listed in Table 2. The slurry contained an overall fragrance load of 31.2%.

**TABLE 2**

| Ingredient | Amount (grams) | Weight % |
|---|---|---|
| Fragrance | 187.2 | 31.2 |
| Caprylic/capric triglyceride | 46.8 | 7.8 |
| Pea protein | 17.5 | 2.9 |
| Guanidine Carbonate | 7.6 | 1.3 |
| Citric Acid | 7.3 | 1.2 |
| High molecular weight polystyrene sulfonate, sodium salt sold under the tradename FLEXAN^{®} II | 2.9 | 0.5 |
| Modified Starch sold under the tradename PURITY GUM^{®} Ultra | 5.9 | 1.0 |
| Trimethylol propane-adduct of xylylene diisocyanate sold under tradename TAKENATE^{®} D110N | 5.85 | 1 |
| Tanal-02 | 2.9 | 0.5 |
| Xanthan gum | 0.5 | 0.08 |
| 1,2-Benzisothiazolin-3-one sold under the tradename PROXEL^{®} GXL | 0.7 | 0.1 |
| Water | 309 | 51.5 |
| Total | 600 | 100 |

### Example 3: Preparation of Isocyanate Capsules in the Presence of Pea Protein, Modified Starch/Polystyrene Sulfonate, Sodium Salt at pH 4 and a Cure Temperature of 65°C

The general procedure of Example 2 was followed with the following changes: the pH of the aqueous phase was adjusted to 4 instead of 5 and curing was carried out at 65°C for 4 hours. The components of the slurry are listed in Table 3. The slurry contained an overall fragrance load of 31.2%.

**TABLE 3**

| Ingredient | Amount (grams) | Weight % |
|---|---|---|
| Fragrance | 187.2 | 31.2 |
| Caprylic/capric triglyceride | 46.8 | 7.8 |
| Pea protein | 17.5 | 2.9 |
| Guanidine Carbonate | 7.6 | 1.3 |
| Citric Acid | 14.0 | 2.3 |
| High molecular weight polystyrene sulfonate, sodium salt sold under the tradename FLEXAN^{®} II | 2.9 | 0.5 |
| Modified Starch sold under the tradename PURITY GUM^{®} Ultra | 5.9 | 1.0 |
| Trimethylol propane-adduct of xylylene diisocyanate sold under tradename TAKENATE^{®} D110N | 5.85 | 1 |
| Tanal-02 | 2.9 | 0.5 |
| Xanthan gum | 0.5 | 0.08 |
| 1,2-Benzisothiazolin-3-one sold under the tradename PROXEL^{®} GXL | 0.7 | 0.1 |
| Water | 302.3 | 50.4 |
| Total | 600 | 100 |

### Example 4: Preparation of Capsules with Reduced Levels of Pea Protein

The general procedure of Example 3 was carried out with a reduced concentration of pea protein. The components of the slurry are listed in Table 4. The slurry contained an overall fragrance load of 31.2%.

**TABLE 4**

| Ingredient | Amount (grams) | Weight % |
|---|---|---|
| Fragrance | 187.2 | 31.2 |
| Caprylic/capric triglyceride | 46.8 | 7.8 |
| Pea protein | 11 | 1.8 |
| Guanidine Carbonate | 7.6 | 1.3 |
| Citric Acid | 14.0 | 2.3 |
| High molecular weight polystyrene sulfonate, sodium salt sold under the tradename FLEXAN^{®} II | 2.9 | 0.5 |
| Modified Starch sold under the tradename PURITY GUM^{®} Ultra | 5.9 | 1.0 |
| Trimethylol propane-adduct of xylylene diisocyanate sold under tradename TAKENATE^{®} D110N | 5.85 | 1 |
| Tanal-02 | 2.9 | 0.5 |
| Xanthan gum | 0.5 | 0.08 |
| 1,2-Benzisothiazolin-3-one sold under the tradename PROXEL^{®} GXL | 0.7 | 0.1 |
| Water | 308.8 | 51.5 |
| Total | 600 | 100 |

### Example 5: Preparation of Capsules Under Reduced pH Conditions

The general procedure of Example 3 was carried out but the pH was reduced from 4 to 3. The components of the slurry are listed in Table 5. The slurry contained an overall fragrance load of 30.3%.

**TABLE 5**

| Ingredient | Amount (grams) | Weight % |
|---|---|---|
| Fragrance | 187.2 | 30.3 |
| Caprylic/capric triglyceride | 46.8 | 7.6 |
| Pea protein | 17.5 | 2.8 |
| Guanidine Carbonate | 7.6 | 1.2 |
| Citric Acid | 21.5 | 3.5 |
| High molecular weight polystyrene sulfonate, sodium salt sold under the tradename FLEXAN^{®} II | 2.9 | 0.5 |
| Modified Starch sold under the tradename PURITY GUM^{®} Ultra | 5.9 | 1.0 |
| Trimethylol propane-adduct of xylylene diisocyanate sold under tradename TAKENATE^{®} D110N | 5.85 | 0.9 |
| Tanal-02 | 2.9 | 0.5 |
| Xanthan gum | 0.5 | 0.08 |
| 1,2-Benzisothiazolin-3-one sold under the tradename PROXEL^{®} GXL | 0.7 | 0.1 |
| Water | 311.7 | 50.5 |
| Total | 616.9 | 100 |

### Example 6: Preparation of Capsules with Reduced pH Using Phosphoric Acid

The general procedure of Example 3 was carried out with phosphoric acid instead of citric acid to reduce pH. The components of the slurry are listed in Table 6. The slurry contained an overall fragrance load of 32.2%.

**TABLE 6**

| Ingredient | Amount (grams) | Weight % |
|---|---|---|
| Fragrance | 187.2 | 32.2 |
| Caprylic/capric triglyceride | 46.8 | 8.1 |
| Pea protein | 17.5 | 3.0 |
| Guanidine Carbonate | 7.6 | 1.3 |
| Phosphoric acid | 9.4 | 1.5 |
| High molecular weight polystyrene sulfonate, sodium salt sold under the tradename FLEXAN^{®} II | 2.9 | 0.5 |
| Modified Starch sold under the tradename PURITY GUM^{®} Ultra | 5.9 | 1.0 |
| Trimethylol propane-adduct of xylylene diisocyanate sold under tradename TAKENATE^{®} D110N | 5.85 | 1 |
| Tanal-02 | 2.9 | 0.5 |
| Xanthan gum | 0.5 | 0.08 |
| 1,2-Benzisothiazolin-3-one sold under the tradename PROXEL^{®} GXL | 0.7 | 0.1 |
| Water | 302.3 | 52 |
| Total | 581 | 100 |

### Example 7: Preparation of Capsules with Increased Fragrance Load

The general procedure of Example 3 was followed with a reduced amount of water. The components of the slurry are listed in Table 7. The slurry contained an overall fragrance load of 34.6%.

**TABLE 7**

| Ingredient | Amount (grams) | Weight % |
|---|---|---|
| Fragrance | 187.2 | 34.6 |
| Caprylic/capric triglyceride | 46.8 | 8 |
| Pea protein | 17.5 | 3.0 |
| Citric Acid | 5.7 | 1.0 |
| High molecular weight polystyrene sulfonate, | 2.9 | 0.5 |
| sodium salt sold under the tradename FLEXAN^{®} II | | |
| Modified Starch sold under the tradename PURITY GUM^{®} Ultra | 5.9 | 1.0 |
| Trimethylol propane-adduct of xylylene diisocyanate sold under tradename TAKENATE^{®} D110N | 5.85 | 2.0 |
| Tanal-02 | 5.8 | 1.0 |
| Xanthan gum | 0.5 | 0.09 |
| 1,2-Benzisothiazolin-3-one sold under the tradename PROXEL^{®} GXL | 0.7 | 0.1 |
| Water | 296.3 | 51.0 |
| Total | 581 | 100 |

### Example 8: Preparation of Capsules with a Higher Concentration of Surfactants

The general procedure of Example 3 was followed with a greater amount of surfactant solution. The components of the slurry are listed in Table 8. The slurry contained an overall fragrance load of 28.6%.

**TABLE 8**

| Ingredient | Amount (grams) | Weight % |
|---|---|---|
| Fragrance | 187.2 | 28.6 |
| Caprylic/capric triglyceride | 46.8 | 7.2 |
| Pea protein | 17.5 | 2.7 |
| Citric Acid | 5.2 | 0.8 |
| High molecular weight polystyrene sulfonate, sodium salt sold under the tradename FLEXAN^{®} II | 4.4 | 0.7 |
| Modified Starch sold under the tradename PURITY GUM^{®} Ultra | 8.9 | 1.4 |
| Trimethylol propane-adduct of xylylene diisocyanate sold under tradename TAKENATE^{®} D110N | 5.85 | 0.9 |
| Tanal-02 | 2.9 | 0.4 |
| Xanthan gum | 0.5 | 0.08 |
| 1,2-Benzisothiazolin-3-one sold under the tradename PROXEL^{®} GXL | 0.7 | 0.1 |
| Water | 320.05 | 53.3 |
| Total | 600 | 100 |

### Example 9: Capsules Prepared with Pea Protein and Gum Arabic

An oil phase was prepared by mixing 80 parts by weight of Helion fragrance with 20 parts by weight of caprylic/capric triglyceride solvent sold under that tradename NEOBEE^{®} M-5 by Stepan (Chicago, IL) thereby forming a fragrance/solvent composition.

An aqueous phase was prepared by dispersing 12.43 grams of pea protein powder in 124 grams of water and adjusting the pH to 9-9.5 using 0.3 grams of 25% sodium hydroxide solution. To facilitate dissolution and inhibit aggregation of the pea protein isolate (Liu, et al. (2010) Food Res. Internatl. 43:489-495), 85 grams of a gum arabic Instant AA (Nexira, Somerville, NJ; 10% solution) was included as a hydrocolloid. The mixture was high sheared for 20 seconds at 7400 rpm. High molecular weight polystyrene sulfonate, sodium salt sold under the tradename FLEXAN^{®} II (15 grams of a 10% solution) was added and the mixture was high sheared for 20 seconds at 7400 rpm. In a separate beaker, 38 grams guanidine carbonate solution (20%) was pH to 4 adjusted using 31 grams of a 50% solution of citric acid and the solution was allowed to foam out. The guanidine citrate solution was added to the protein mix and allowed to react for 15 minutes at room temperature. Forty-eight grams of a 1% solution of xanthan gum was subsequently added to the water phase followed by 10 grams of a 30% solution of Tanal-02.

A polyisocyanate (trimethylol propane-adduct of xylylene diisocyanate commercially available under the tradename TAKENATE^{®} D110N, Mitsue Chemicals Inc., Japan) was added to the oil phase at 5 weight %. The oil phase was then emulsified into the aqueous phase to form an oil-in-water emulsion under a shearing rate of 7400 rpm for 3 minutes.

For the microcapsule slurry, curing of the polymeric layer around the fragrance/solvent composition droplets was carried out at 65°C for 4 hours. Additionally, a preservative was added. The components of the slurry are listed in Table 9. The slurry contained an overall fragrance load of 31.2%.

**TABLE 9**

| Ingredient | Amount (grams) | Weight % |
|---|---|---|
| Fragrance | 187.2 | 31.2 |
| Caprylic/capric triglyceride | 46.8 | 7.8 |
| Pea protein | 12.4 | 2 |
| Citric Acid | 15.5 | 2.5 |
| High molecular weight polystyrene sulfonate, sodium salt sold under the tradename FLEXAN^{®} II | 1.5 | 0.25 |
| Gum arabic | 8.5 | 1.4% |
| Trimethylol propane-adduct of xylylene diisocyanate sold under tradename TAKENATE^{®} D110N | 5.85 | 0.97 |
| Tanal-02 | 3 | 0.5 |
| Xanthan gum | 0.5 | 0.08 |
| 1,2-Benzisothiazolin-3-one sold under the tradename PROXEL^{®} GXL | 0.7 | 0.1 |
| Water | 318.05 | 53 |
| Total | 600 | 100 |

### Example 10: Fabric Conditioner Samples Containing Microcapsules

An un-fragranced model fabric conditioner having a 10% hole in the formulation was used to allow for water and capsules to be added. Microcapsules as described in Examples 1-3 were pre-mixed with water and then added to the model fabric conditioner. The samples were homogenized using an overhead agitator at 300 rpm. The finished fabric conditioner samples contained 0.2% neat oil equivalent resulting in 0.65 weight % encapsulated fragrance for the microcapsules in Examples 2 and 3 and 0.72 weight % encapsulated fragrance for the control microcapsules in Example 1.

Thirty-five grams of finished fabric conditioners containing the above-referenced dosage of microcapsule were added to a front load Miele Professional PW 6065 Vario washing machine. The wash load contained 2.2 kg of laundry including eight big towels, two T-shirts, two pillow cases, two dish towels, and two mini-towels for evaluation. The washing temperature was set to 40°C with 15.5 L of water used for the main wash and 34 L of total water for two rinses. The total washing cycle was 60 minutes. Some towels were kept for damp evaluation and the rest were line dried at room temperature for dry evaluation.

Randomly selected damp samples were evaluated by several experts using the intensity scale 0-5, where 0 is "no performance" and 5 is "strong performance." The evaluation was performed "blind," such that each sample had a randomly allocated number. The dry evaluation was performed the day following the damp and was performed by the same experts using the same intensity scale of 0-5. Sensory scores were recorded before and after, each of the randomly selected cloths (contained in a separate polyethylene bag) was gently handled. The results of these analyses are presented in Table 10. Example 3, which is the pea protein/isocyanate capsules with low pH and low curing temperature, performs better by providing a strong fragrance burst during dry evaluation (post-handling) than both melamine formaldehyde capsules (Example 1) and pea protein/isocyanate capsules with high pH and high curing temperature (Example 2). Furthermore, Example 3 capsules demonstrate that they survive the damp stage on cloth, even though they are relatively weak compared to the Example 2 capsules. Moreover, Example 3 capsules have improved processability, no aggregate formation and improved slurry color when compared to Examples 1 and 2 capsules.

**TABLE 10**

| Exemplary Capsule | Damp Evaluation | Dry Evaluation | |
|---|---|---|---|
| | | Pre-Handling | Post-Handling |
| 1 | 3.56 | 3.19 | 4.05 |
| 2 | 3.88 | 3.36 | 3.74 |
| 3 | 3.60 | 3.29 | 4.13 |

### Example 11: Analytical Evaluation of Different Capsules

Characteristics including fragrance load, encapsulation efficiency, free oil, viscosity and size of the microcapsules produced in Examples 1, 3, 4, 5, 6 and 9 were determined. The results of these analyses are presented in Table 11.

**TABLE 11**

| Exemplary Capsule | Fr. Load, % | EE, % | Free Oil, % | Viscosity (cps; 21 s-1) | PSD (Mean/Mode) |
|---|---|---|---|---|---|
| 1 | 28 | >95 | 0.39 | 625 | 6.7/5.4 |
| 3 | 31.2 | >95 | 0.3-1.9 | 574 | 22.1/15.6 |
| 4 | 31.2 | >95 | 0.2 | tbm | 34.5/16.2 |
| 5 | 30.3 | >95 | 0.4 | tbm | 24.5/18.9 |
| 6 | 32.2 | >95 | 0.2 | tbm | tbm |
| 9 | 31.2 | >95 | 0.18 | 357 | 23.3/24.3 |

| | | | | | |
|---|---|---|---|---|---|
| Fr. Load, Fragrance Load. EE, Encapsulation Efficiency. PSD, particle size distribution. Tbm, to be measured. Viscosity was measured on a hake plate rheometer using 5, 21, and 64 sec shear rates. | | | | | |

In addition, wall strength was determined for capsules prepared in Example 9 as compared to whey capsules prepared in accordance with Example 7 in WO 2020/131875 A2 or capsules prepared in accordance with Example 2. This analysis, presented in FIG. 1, indicates that the choice of protein had a smaller influence on the wall strength and flexibility of the capsules. The pH and cure profile have a stronger effect on the wall strength while maintaining the flexibility of the wall (deformation). This combination allows for the minimal damp performance but very strong burst with minimal friction on the dry stages. The wall strength is so weak that minimal energy breaks the wall but the flexibility is sufficient to survive the wash cycle in a EU washing machine and the damp stage on cloth. Even though the isocyanate/pea protein-based capsules are relatively weak compared to the whey capsules or melamine formaldehyde capsules, isocyanate/pea protein-based capsules have good stability in product and processability of the slurry is maintained.

### Example 12: Malodor Absorption Capabilities

To test the malodor absorption capabilities of the capsules disclosed herein, diethyl phthalate and caprylic/capric triglyceride solvent sold under that tradename NEOBEE^{®} M-5 by Stepan Corp. (Chicago, IL) were encapsulated according to the methods presented in Example 1 (melamine formaldehyde) and Example 9 (isocyanate capsule prepared with pea protein and gum arabic) to generate odorless capsules.

The capsules were exposed to malodor and the reduction of the malodor concentration was measured via headspace analysis. More specifically, 100 grams of 1.5% malodor solution was placed into a jar and allowed to equilibrate for 30 minutes. A towel was "activated" by rubbing the towel five times with a tongue depressor on a side marked with an "X." The "activated" towel, with "X" side up, was placed in a second jar (16 oz.) fitted with a septa injection lid. With a 100 mL gas tight syringe, 100 ml of malodor vapor was transferred into the second jar containing the towel sample. The towel sample was stored for 1.5 hours and headspace was subsequently analyzed using a SKC pump with 150 ml/min flow, sampling for 10 minutes on to a tenax tube.

The results of this analysis (Table 12) indicate that isocyanate capsules prepared with pea protein and gum Arabic have malodor absorption capabilities comparable to melamine formaldehyde capsules.

**TABLE 12**

| Malodor | Mean Area | | |
|---|---|---|---|
| | Blank | Example 1 | Example 9 |
| Iso valeraldehyde | 2805176984 | 1640184599 | 1370641528 |
| Acetyl methyl carbinol | 1990840968 | 302635768 | 168033889.5 |
| Methyl pyrazine | 1800621600 | 318617731 | 176231698 |
| Heptanal | 935200716 | 558749725.5 | 545558189 |

### Example 13: Capsules Prepared with Oils Containing a High Concentration of Natural Components

The performance of capsules incorporating natural fragrances (*i.e*., extracts from plants or distillation products) or naturally derived fragrances (*i.e*., natural fragrances that have been chemically modified) was also assessed (Table 13). These capsules were prepared in accordance with the method described in Example 9.

**TABLE 13**

| Fragrance | % Naturals & Naturally derived | Free Oil (%) | Viscosity (cps) (5 s-1) (21 s-1) (106 s-1) | Performance | | Leakage at 5 weeks (%) |
|---|---|---|---|---|---|---|
| | | | | at fresh | at 4 weeks | |
| Tea Leaves | 23.5% (15.5% Essential Oils) | 0.25 | 476 | ++ | ++ | <10 |
| | | | 293 | | | |
| | | | 214 | | | |
| Apple 2 | 17% (3.5% Essential Oils) | 0.22 | 584 | ++ | ++ | <10 |
| | | | 358 | | | |
| | | | 273 | | | |
| Bamboo 2 | (3.2% Essential Oils) | 0.44 | 569 | ++ | ++ | <10 |
| | | | 315 | | | |
| | | | 175 | | | |
| Clean Linen | 18% (8% Essential Oils) | 0.23 | 451 | ++ | ++ | <10 |
| | | | 270 | | | |
| | | | 190 | | | |
| Rose | 15% (5% Essential oils) | 0.52 | 476 | ++ | ++ | <10 |
| | | | 281 | | | |
| | | | 197 | | | |
| Rose litchi | 14.5% (3% Essential Oils) | 0.35 | 465 | ++ | ++ | <10 |
| | | | 265 | | | |
| | | | 174 | | | |
| Mango | 69.55% (16,68% Essential Oils) | 0.46 | 462 | ++ | - | <10 |
| | | | 299 | | | |
| | | | 231 | | | |
| Watermelon | 22.3% naturally derived/ 3.7% natural | 0.41 | 479 | + | +/- | 16 |
| | | | 308 | | | |
| | | | 239 | | | |
| Lavender Blackberry | 51.09% (9.82% Essential Oils) | 0.48 | 513 | - | n/a | n/a |
| | | | 331 | | | |
| | | | 254 | | | |
| Lavender | 100% (45% Essential Oils) | 0.35 | 536 | ++ | ++ | <10 |
| | | | 325 | | | |
| | | | 245 | | | |
| Tubereuz | 13.3% naturals & 23% naturally derived | 0.67 | 484 | ++ | ++ | 14 |
| | | | 284 | | | |
| | | | 196 | | | |
| Eau d'Oranger | 45% naturally derived & 10.3% natural | 0.37 | 516 | + | + | <10 |
| | | | 304 | | | |
| | | | 214 | | | |
| Citrus Spicy | 100% (74.58% Essential Oils) | 0.52 | 502 | - | n/a | n/a |
| | | | 283 | | | |
| | | | 173 | | | |
| Xmas Tree | 99% (23.5% Essential Oils) | 0.52 | 704 | + | + | n/a |
| | | | 472 | | | |
| | | | 388 | | | |

| | | | | | | |
|---|---|---|---|---|---|---|
| "++" represents excellent performance burst and hedonics on dry. "+" represents good performance with burst on dry and hedonics. "-" represents poor performance on dry and hedonics .n/a, not available. | | | | | | |

Leakage of fragrance from the capsules prepared in accordance with the method described in Example 9 was evaluated after storage at 37°C in fabric conditioner. The results of this analysis (Table 14) show stable encapsulation of oils containing high amounts of natural extracts and essential oils.

The performance of isocyanate capsules prepared in accordance with the method described in Example 9 were compared to melamine formaldehyde capsules (Example 1) at damp, dry pre, dry GH and dry post stages. Fragrance intensity was determined on a scale of 0-5, where 0 is no performance and 5 is maximum. Strength and hedonics were assessed by perfumers and scent design managers.

**TABLE 14**

| Fragrance | Capsule | Damp | Dry Pre | Dry GH | Dry Post |
|---|---|---|---|---|---|
| Tea Leaves | Ex. 9 | ++ | ++ | ++ | ++ |
| | Ex. 1 (ref) | + | +/- | +/- | +/- |
| Apple 2 | Ex. 9 | ++ | + | + | + |
| | Ex. 1 (ref)* | ++ | ++ | ++ | ++ |
| Lavender | Ex. 9 | ++ | ++ | ++ | ++ |
| | Ex. 1 (ref) | ++^ | ++^ | ++^ | ++^ |

| | | | | | |
|---|---|---|---|---|---|
| *, Failed, due to high viscosity in process. ++, stable performance and hedonics. +, stable performance, but less character. +/-, less performance and character. ^, Difference in release profile, but acceptable. | | | | | |

The expert evaluation with scent design managers and perfumers indicated that the hedonics was stable for capsules produced by the method described in Example 9 for the oils containing high level of naturals (Table 14). By comparison, melamine formaldehyde capsules did not show good encapsulation or stable performance overtime in the product.

### Example 14: Capsules Prepared with Difficult Fragrances

Ethyl vanillin (Clog P of 2.84) and vanillin are relatively water-soluble fragrance ingredients. Ethyl vanillin and vanillin are not conventionally encapsulated in conventional microcapsules because their water-soluble nature causes these fragrances to leak out of the microcapsule. Accordingly, the stability of such difficult fragrances was assessed in a microcapsule prepared in accordance with the method described in Example 9. The results of this analysis (FIG. 2) indicated that microcapsules prepared in accordance with the method described in Example 9, which incorporated ethyl vanillin in a base probe fragrance, exhibited good performance in a fabric conditioner base.

## Claims

1. A core-shell microcapsule composition comprising:
(a) microcapsules having a mean diameter of 1 to 100 microns, the core of the microcapsules comprises an active material and the shell of the microcapsules comprises a trimethylol propane-adduct of xylylene diisocyanate;
(b) a dispersant comprising denatured pea protein; and
(c) a hydrocolloid comprising gum arabic.

2. The core-shell microcapsule composition of claim 1, further comprising least one rheology modifier, preservative, emulsifier, or a combination thereof.

3. The core-shell microcapsule composition of claim 2, wherein the rheology modifier comprises xanthan gum.

4. The core-shell microcapsule composition of any one of the preceding claims, wherein the trimethylol propane-adduct of xylylene diisocyanate is present at 0.1% to 8% by weight of the core-shell microcapsule composition.

5. The core-shell microcapsule composition of any one of the preceding claims, wherein the active material comprises at least one fragrance, pro-fragrance, malodor counteractive agent, or a combination thereof.

6. A consumer product comprising the core-shell microcapsule composition of any one of claims 1 to 5, preferably the consumer product is a fabric softener, a fabric refresher, or a liquid laundry detergent.

7. A method for producing a core-shell microcapsule composition comprising:
(a) preparing an aqueous phase by
(i) denaturing a pea protein,
(ii) adjusting the pH to below 6, and
(iii) adding gum arabic as a hydrocolloid;
(b) preparing an oil phase comprising an active material and a trimethylol propane-adduct of xylylene diisocyanate;
(c) emulsifying the oil phase into the aqueous phase to form a slurry; and
(d) curing the slurry at a temperature below 80°C to produce a core-shell microcapsule composition.

8. The method of claim 7, wherein the pH in (a) (ii) is adjusted to between 4.5 and 3.5.

9. The method of claim 7 or 8, wherein the slurry in (d) is cured at a temperature in the range of 63°C to 67°C.

10. The method of any one of claims 7 to 9, wherein the active material comprises at least one fragrance, pro-fragrance, malodor counteractive agent, or a combination thereof.

11. The method of any one of claims 7 to 10, further comprising adding at least one rheology modifier, preservative, emulsifier, or a combination thereof.

12. The method of claim 11, wherein the rheology modifier is added prior to step (c).

13. The method of claim 11 or 12, wherein the rheology modifier is xanthan gum.

14. The method of any one of claims 7 to 13, wherein the trimethylol propane-adduct of xylylene diisocyanate is present at 0.1% to 8% by weight of the core-shell microcapsule composition.

15. A method for producing a biodegradable core-shell microcapsule composition comprising polymerizing a wall material consisting of an isocyanate in the presence of a denatured pea protein, wherein the isocyanate is present at a level of less than 1% by weight of the biodegradable core-shell microcapsule composition.
